# EUROPÄISCHE PATENTSCHRIFT

(11) **EP 1 154 188 B1**
(45) Veröffentlichungstag und Bekanntmachung des Hinweises auf die Patenterteilung: **23.03.2005**
(21) Anmeldenummer: 01890143.9
(22) Anmeldetag: 11.05.2001
(51) Int. Cl.: F16L 33/207, F16L 35/00, B30B 15/18

(54) **Vorrichtung zum Anschliessen eines Hydraulikschlauches an eine Schlaucharmatur**
Device for attaching a hydraulic hose to a hose-fitting
Dispositif pour fixer un conduit flexible hydraulique à un embout

(30) Priorität: 12.05.2000 AT 8312000
(43) Veröffentlichungstag der Anmeldung: 14.11.2001
(73) Patentinhaber: Steyr-Werner Wälzlager und Industrieprodukte Gesellschaft m.b.H., 4066 Pasching (AT)
(72) Erfinder: Kothgassner, Helmut, 4452 Ternberg (AT)
(74) Vertreter: Hübscher, Helmut, Dipl.-Ing.

(56) Entgegenhaltungen:
- EP-A- 0 161 864
- US-A- 3 662 450
- US-A- 3 750 453
- US-A- 4 564 223
- US-A- 5 829 289

## Beschreibung

Die Erfindung bezieht sich auf eine Vorrichtung zum Anschließen eines Hydraulikschlauches an eine Schlaucharmatur, die einen Nippel und eine mit dem Nippel zugfest verbundene Fassungshülse mit auf ihrer Innenwandung vorgesehenen, im Querschnitt widerhakenartigen Umfangsrippen aufweist, wobei das auf den Nippel aufgeschobene Schlauchende zwischen dem Nippel und der radial zusammengedrückten Fassungshülse unter einem Eindringen der Umfangsrippen in die Außenwandung des Schlauchendes festklemmbar ist, mit einer Presse, die über einen Pressenantrieb radial verstellbare Preßbacken zum radialen Zusammendrücken der Fassungshülse der zwischen die Preßbacken eingeführten Schlaucharmatur aufweist, und mit einem in den Nippel der Schlaucharmatur einführbaren Meßfühler zum Steuern des Pressenantriebes in Abhängigkeit von dem durch den Meßfühler erfaßten Nippelinnendurchmesser bzw. von dessen Veränderung.

Um einen Hydraulikschlauch an eine Schlaucharmatur anzuschließen, wird das Schlauchende auf einen Nippel der Schlaucharmatur aufgeschoben und mit Hilfe einer Fassungshülse angeklemmt, die zugfest mit dem Nippel verbunden ist. Die Fassungshülse weist auf ihrer Innenwandung im Querschnitt widerhakenartige Umfangsrippen auf, die beim radialen Zusammendrücken der Fassungshülse in das Schlauchende eindringen und eine formschlüssige Verkrallung zwischen der Außenwandung des Schlauchendes und der Fassungshülse bewirken. Um eine vorteilhafte Klemmhalterung sicherzustellen, müssen die im Querschnitt widerhakenartigen Umfangsrippen der Fassungshülse bis in den Bereich der üblicherweise vorgesehenen, metallischen Bewehrungseinlage der Hydraulikschläuche in die Außenwandung eindringen, ohne unzulässige Verformungen des Schlauchendes im Bereich zwischen den Umfangsrippen der Fassungshülse und im Nippelbereich befürchten zu müssen. Damit diese Bedingungen eingehalten werden können, wurde versucht, einerseits die auf die Fassungshülse auszuübende radiale Preßkraft und anderseits den radialen Preßhub möglichst genau vorzugeben. Mit der Vorgabe einer entsprechenden radialen Preßkraft können jedoch nicht die unterschiedlichen Verformungswiderstände berücksichtigt werden. Bei einer Steuerung des Preßhubes bleiben die Fertigungstoleranzen nicht nur im Bereich der Schlauchdurchmesser, sondern auch für die Durchmesser der Nippel und Fassungshülsen unberücksichtigt, so daß aufgrund der unvermeidbaren Toleranzen und Unterschiede in den Werkstoffeigenschaften keine diese Einflußgrößen ausreichend berücksichtigende Klemmhalterung beim Anklemmen eines Schlauchendes an eine Schlaucharmatur sichergestellt werden kann. Es ist höchstens möglich, nach dem Herstellen der Klemmverbindung diese zu überprüfen.

Um diese Nachteile zu vermeiden, ist es bekannt (SU 1 359 542 A1), den Pressenantrieb in Abhängigkeit von den durch eine Meßdose erfaßten Innendurchmesser des Nippels zu steuern, so daß das Maß der Einschnürung des Nippels eine auswertbare Größe für die erreichte Klemmhalterung darstellt. Nachteilig bei dieser bekannten Konstruktion ist allerdings, daß mit dem Einsatz von Meßdosen ein erheblicher Aufwand verbunden ist.

Der Erfindung liegt somit die Aufgabe zugrunde, eine Vorrichtung zum Anschließen eines Hydraulikschlauches an eine Schlaucharmatur der eingangs geschilderten Art so auszugestalten, daß in einfacher Weise der Nippelinnendurchmesser bzw. dessen Veränderungen ermittelt werden können.

Die Erfindung löst die gestellte Aufgabe dadurch, daß der Meßfühler aus einem mit einer Druckluftquelle verbindbaren, am freien Ende verschlossenen Blasrohr mit radialen, gegen die Innenwandung des Nippels gerichteten Düsenöffnungen und einer an das Blasrohr anschließbaren Druckmeßeinrichtung als Meßwertgeber für die Steuerung des Pressenantriebes besteht.

Aufgrund dieser Maßnahmen braucht lediglich der sich mit einer Einschnürung des Nippelinnendurchmessers vergrößernde Staudruck innerhalb des Blasrohres über eine Druckmeßeinrichtung überwacht zu werden, um über die Meßwerte dieser Druckmeßeinrichtung den Pressenantrieb abzuschalten, wenn eine entsprechende Nippeleinschnürung über den ansteigenden Meßdruck festgestellt wird. Das Schlauchende muß bei der festgestellten Einschnürung des Nippels mit einer ausreichenden Klemmkraft an den Nippel angepreßt worden sein, um die angestrebte Verkrallung zwischen dem Schlauchende und den in die Außenwandung des Schlauches eingreifenden, im Querschnitt widerhakenartigen Umfangsrippen der Fassungshülse sicherzustellen. Diese Umfangsrippen dringen bis in den Bereich der metallischen Bewehrungseinlage in den Schlauchmantel ein, so daß sich zwischen den Umfangsrippen und der Bewehrungseinlage der angestrebte Formschluß einstellen kann, ohne eine unzulässige Verformung der Bewehrungseinlage, des Schlauchendes oder des Nippels befürchten zu müssen.

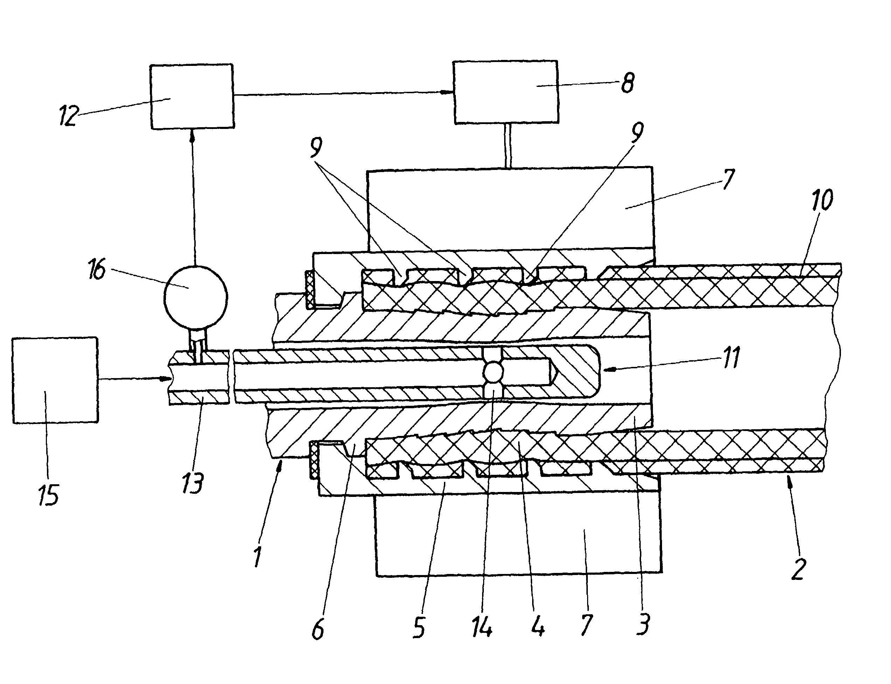

In der Zeichnung ist der Erfindungsgegenstand dargestellt, und zwar wird eine erfindungsgemäße Vorrichtung zum Anschließen eines Hydraulikschlauches an eine Schlaucharmatur in einem schematischen Blockschaltbild gezeigt.

Die nicht näher dargestellte Schlaucharmatur 1 zum Anschließen eines Hydraulikschlauches 2 bildet in herkömmlicher Weise einen Nippel 3, auf den das anzuschließende Schlauchende 4 aufgeschoben wird. Dieser Nippel 3 trägt eine Fassungshülse 5, die zur zugfesten Verbindung mit dem Nippel eine Ringschulter 6 des Nippels 3 übergreift. Da im allgemeinen die Fassungshülse 5 auf den Nippel 3 vor dem Aufstecken des Schlauchendes 4 aufgebracht wird, ist dieses Schlauchende 4 in den Ringspalt zwischen dem Nippel 3 und der Fassungshülse 5 einzuführen, bevor die Fassungshülse 5 mit Hilfe von radial wirksamen Preßbacken 7 zusammengedrückt wird, die um den Umfang der Fassungshülse 5 gleichmäßig verteilt angeordnet sind. Aufgrund der Beaufschlagung der Preßbacken 7 durch einen schematisch angedeuteten Pressenantrieb 8 wird das Schlauchende 4 zwischen dem Nippel 3 und der Fassungshülse 5 radial geklemmt, wobei die an der Innenwandung der Fassungshülse 5 vorgesehenen, im Querschnitt widerhakenartigen Umfangsrippen 9 in die Außenwandung des Schlauchendes 4 bis in den Bereich einer metallischen Bewehrungseinlage 10 eindringen, die üblicherweise durch ein ein- oder mehrlagiges Drahtgeflecht gebildet wird. Die Verkrallung zwischen den widerhakenartigen Umfangsrippen 9 und dem Schlauchende 4 soll dabei eine formschlüssige Verbindung zwischen den Umfangsrippen 9 und der Bewehrungseinlage 10 sicherstellen, indem die zahnartigen Umfangsrippen 9 die Bewehrungseinlage verformen, wie dies in der Zeichnung angedeutet ist. Dieser Formschluß zwischen den Umfangsrippen 9 und der Bewehrungseinlage 10 bedingt ein ausreichend tiefes Eindringen der Umfangsrippen 9 in die Außenwandung des Schlauchendes 4. Die Eindringtiefe darf jedoch nicht zu einer unzulässigen Verformung des Schlauchendes 4 und der Bewehrungseinlage 10 führen, was sich in einer übermäßigen Einschnürung des Nippels 3 bemerkbar macht. Eine geringfügige Einschnürung des Nippels 3 soll jedoch zugelassen werden, um eine ausreichende Eindringtiefe der Umfangsrippen 9 in die Außenwandung des Schlauchendes 4 sicherzustellen. Erst wenn eine solche Einschnürung des Nippels 3 auftritt, ist gewährleistet, daß über die Fassungshülse 5 eine ausreichende Klemmkraft auf das Schlauchende 4 ausgeübt wird.

Damit nun beim Zusammendrücken der Fassungshülse 5 die erforderliche Klemmkraft ohne Überlastung des Schlauchendes 4 aufgebracht werden kann, wird der Pressenantrieb 8 in Abhängigkeit von der sich einstellenden Einschnürung des Nippels 3 gesteuert. Zu diesem Zweck wird in den Nippel 3 ein Meßfühler 11 für den Innendurchmesser des Nippels bzw. für die Durchmesseränderungen eingeführt und der Pressenantrieb 8 über eine Steuereinrichtung 12 in Abhängigkeit von den Meßsignalen des Meßfühlers 11 betätigt. Sobald eine entsprechende Einschnürung des Nippels 3 über den Meßfühler 11 erkannt wird, wird der Pressenantrieb 8 über die Steuereinrichtung 12 abgeschaltet, und der Anklemmvorgang beendet. Der radiale Preßhub der Preßbakken 7, der von den jeweiligen Abmessungstoleranzen des Nippels 3, des Schlauchendes 4 und der Fassungshülse 5 abhängt, ergibt sich somit automatisch durch die Erfassung der Einschnürung des Nippels 3. Damit ist aber auch gewährleistet, daß die angestrebte Klemmhalterung in engen Grenzen unabhängig von den jeweiligen Abmessungstoleranzen der einzelnen Bauteile hergestellt werden kann.

Der Meßfühler 11 ist als Blasrohr 13 ausgebildet, das an seinem Einführende verschlossen ist und im Bereich der zu erwartenden Einschnürung gegen die Innenwandung des Nippels 3 gerichtete, radiale Düsenöffnungen 14 aufweist. Da das Blasrohr 13 an eine Druckluftquelle 15 angeschlossen ist, strömt ein Teil der Druckluft über die Düsenöffnungen 14 in den Nippel 3. Der im Blasrohr 13 meßbare Staudruck hängt von der Größe des Drosselspaltes zwischen dem Blasrohr 13 und dem Nippel 3 im Bereich der Düsenöffnungen 14 ab. Mit einer beginnenden Einschnürung des Nippels 3 erhöht sich demnach der Strömungswiderstand für die aus den Düsenöffnungen 14 in den Nippel 3 ausströmende Luft, was zu einem Anstieg des Staudruckes im Blasrohr 13 führt. Über eine an das Blasrohr 13 angeschlossene Druckmeßeinrichtung 16 werden diese Druckänderungen erfaßt, so daß die Druckmeßeinrichtung 16 als Meßwertgeber für die Einschnürung des Nippels 3 herangezogen werden kann. Es braucht daher lediglich die Druckmeßeinrichtung 16 als Istwertgeber an die Steuereinrichtung 12 angeschlossen zu werden, um den Pressenantrieb 8 bei einer entsprechenden Sollwertvorgabe so ansteuern zu können, daß die geforderte Klemmhalterung des Schlauchendes 4 zwischen dem Nippel 3 und der Fassungshülse 5 unabhängig von Abmessungstoleranzen hergestellt werden kann.

## Patentansprüche

1. Vorrichtung zum Anschließen eines Hydraulikschlauches (2) an eine Schlaucharmatur (1), die einen Nippel (3) und eine mit dem Nippel (3) zugfest verbundene Fassungshülse (5) mit auf ihrer Innenwandung vorgesehenen, im Querschnitt widerhakenartigen Umfangsrippen (9) aufweist, wobei das auf den Nippel (3) aufgeschobene Schlauchende (4) zwischen dem Nippel (3) und der radial zusammengedrückten Fassungshülse (5) unter einem Eindringen der Umfangsrippen (9) in die Außenwandung des Schlauchendes (4) festklemmbar ist, mit einer Presse, die über einen Pressenantrieb (8) radial verstellbare Preßbacken (7) zum radialen Zusammendrücken der Fassungshülse (5) der zwischen die Preßbacken (7) eingeführten Schlaucharmatur (1) aufweist, und mit einem in den Nippel (3) der Schlaucharmatur (1) einführbaren Meßfühler (11) zum Steuern des Pressenantriebes (8) in Abhängigkeit von dem durch den Meßfühler (11) erfaßten Nippelinnendurchmesser bzw. von dessen Veränderung, **dadurch gekennzeichnet, daß** der Meßfühler (11) aus einem mit einer Druckluftquelle (15) verbindbaren, am freien Ende verschlossenen Blasrohr (13) mit radialen, gegen die Innenwandung des Nippels (3) gerichteten Düsenöffnungen (14) und einer an das Blasrohr (13) anschließbaren Druckmeßeinrichtung (16) als Meßwertgeber für die Steuerung des Pressenantriebes (8) besteht.

## Claims

1. A device for connecting a hydraulic hose (2) to a hose fitting (1), comprising a nipple (3) and a holder sleeve (5) which is connected to the nipple (3) so as to be tension-proof, with peripheral ribs (9) in the form of barbs in cross-section provided on the inner wall of the holder sleeve, the hose end (4) pushed on to the nipple (3) being clampable between the nipple (3) and the radially compressed holder sleeve (5) with penetration of the peripheral ribs (9) into the outer wall of the hose end (4), with a press which comprises jaws (7) which are radially movable by means of a press drive (8) for radial compression of the holder sleeve (5) of the hose fitting (1) introduced between the press jaws (7), and with a measuring sensor (11) introducible into the nipple (3) of the hose fitting (1) to control the press drive (8) in dependence on the nipple inside diameter detected by the measuring sensor (11) and the change of such diameter, **characterised in that** the measuring sensor (11) consists of a blow tube (13) which is connectable to a compressed air source (15) and is closed at the free end, with radial nozzle openings (14) directed towards the inner wall of the nipple (3) and a pressure measuring device (16) connectable to the blow tube (13) as a measurement transmitter for controlling the press drive (8).

## Revendications

1. Dispositif de raccordement d'un tuyau hydraulique (2) à une robinetterie pour tuyau (1), présentant un embout (3) et une douille de monture (5), reliée à l'embout (3) de façon résistante à la traction et munie de nervures périphériques (9), à section transversale du genre de contre-crochets et prévues sur sa paroi intérieure, l'extrémité de tuyau (4) emmanchée sur l'embout (3) étant susceptible d'être bloquée par serrage, entre l'embout (3) et la douille de monture (5) comprimée radialement, sous l'effet d'un enfoncement des nervures périphériques (9) dans la paroi extérieure de l'extrémité de tuyau (4), avec une presse présentant des mâchoires de pressage (7), manoeuvrables radialement par l'intermédiaire d'un entraînement de presse (8) afin d'obtenir une compression radiale de la douille de monture (5) de la robinetterie pour tuyau (1) introduite entre les mâchoires de pressage (7), et avec une sonde de mesure (11), susceptible d'être introduite dans l'embout (3) de l'armature pour tuyau (1), afin de commander l'entraînement de presse (8) en fonction du diamètre intérieur d'embout détecté par la sonde de mesure (11) ou bien en fonction de sa variation, **caractérisé en ce que** la sonde de mesure (11) est formée d'un tube de gonflage (13) fermé à l'extrémité libre, susceptible d'être relié à une source d'air comprimé (15), munie d'ouvertures de buses (14) radiales, orientées vers la paroi intérieure de l'embout (3), et d'un dispositif de mesure de pression (16) susceptible d'être raccordé au tube de gonflage (13), servant d'indicateur de valeur de mesure pour la commande de l'entraînement de presse (8).
